# FASCICULE DE BREVET EUROPEEN

(11) **EP 4 386 607 B1**
(45) Date de publication et mention de la délivrance du brevet: **28.01.2026**
(21) Numéro de dépôt: 23216536.5
(22) Date de dépôt: 14.12.2023
(51) Int. Cl.: H04N 21/2347, H04N 21/266, H04N 21/6334, G06F 21/85, H04N 21/835, G06F 21/62

(54) **PROCÉDÉ ET DISPOSITIF DE PROTECTION D'UN FLUX ENTRANT COMPORTANT UN FLUX ÉLÉMENTAIRE CONSTITUÉ DE PAQUETS VIDÉO**
VERFAHREN UND GERÄT ZUM SCHÜTZEN EINES EINGANGSSTREAMS ENTHALTEND EINEN ELEMENTAREN STREAM VON VIDEOPAKETEN
METHOD AND DEVICE FOR PROTECTING AN INCOMING STREAM COMPRISING AN ELEMENTARY STREAM OF VIDEO PACKETS

(30) Priorité: 15.12.2022 FR 2213428
(43) Date de publication de la demande: 19.06.2024
(73) Titulaire: THALES, 92190 Meudon (FR)
(72) Inventeur: ANGER, Augustin, 49309 CHOLET (FR); BONNAFOUX, Luc, 93800 EPINAY SUR SEINE (FR); MARGUERITTE, Etienne, 92622 GENNEVILLIERS CEDEX (FR)
(74) Mandataire: Lavoix

(56) Documents cités:
- US-A1- 2008 298 580
- US-A1- 2018 330 112
- US-A1- 2018 331 824

## Description

L'invention a pour domaine celui de la protection des flux de données, notamment des flux de données vidéo.

Dans le présent document, le niveau de confidentialité attribué à une donnée associe une sensibilité de la donnée elle-même (« secret », « confidentiel », « accès restreint », etc.) à un droit à connaitre cette donnée attribuée à tel ou tel consommateur ou utilisateur de cette donnée.

La protection d'une donnée s'entend alors comme l'attribution d'un niveau de confidentialité adapté à cette donnée.

Dans l'état de la technique, la protection d'une donnée s'effectue au niveau réseau. Il s'agit de ségréguer différents périmètres au sein d'un réseau, et d'attribuer un niveau de confidentialité particulier à chaque périmètre. Chaque périmètre est ainsi homogène en termes de sensibilité des données qui y circulent et de droit d'accès des utilisateurs (un utilisateur ayant le droit d'accès à un périmètre a du coup le droit de connaître toutes les données qui circulent sur ce périmètre). Ce modèle de protection est donc centré sur le réseau et non pas sur les données elles-mêmes.

Cependant, les paradigmes « data centric security » (« sécurité centrée sur la donnée ») ou « zero trust » (« confiance nulle ») ont pour objectif général de recentrer les mesures de protection sur les données afin de permettre une plus grande flexibilité dans la gestion des données, et ceci au cours de l'intégralité du cycle de vie de chaque donnée.

Le cycle de vie d'une donnée s'entend depuis la production de cette donnée par un émetteur ou producteur, sa transmission vers un destinataire ou consommateur, et l'utilisation de cette donnée par ce dernier (l'utilisation pouvant être le simple stockage de la donnée).

Dans le cadre du paradigme « data centric security », on voudrait pouvoir protéger les données d'un flux de données vidéo (ou flux vidéo).

Dans le cas par exemple d'un flux vidéo généré par une caméra de surveillance, on souhaiterait par exemple que les images délivrées par cette caméra puissent être vues par tous les utilisateurs lorsqu'elles sont en basse résolution, et que, lorsque cette caméra est commandée pour fournir des images à haute résolution, ces images ne puissent plus être vues que par des utilisateurs autorisés.

Une solution pourrait consister à coder les images lorsqu'elles sont réservées à un utilisateur autorisé et à permettre leur décodage uniquement lorsque l'utilisateur a été correctement identifié. Cependant, cette technique de protection est binaire puisqu'une image ne peut être que dans deux états seulement, codée ou non codée.

Le document US 2018/331824 A1 divulgue la protection d'un flux de paquets de données. Un premier moteur crypte la charge utile d'un paquet avec une clé symétrique et associe à cette charge utile cryptée, un en-tête comportant notamment une étiquette temporelle et un indice. Parallèlement, chaque clé symétrique est protégée au moyen d'une clé publique partagée entre les usagers par un second moteur. Chaque clé symétrique cryptée est associée à un indice pour établir une correspondance avec la charge utile cryptée d'un paquet du flux

On souhaiterait plus de flexibilité en disposant d'un moyen permettant de protéger les données d'un flux vidéo au niveau le plus adapté, notamment en prenant en compte les producteurs et les consommateurs de cette donnée.

La présente invention a donc pour but de résoudre ce problème en proposant un procédé et un dispositif de protection multi-niveau d'un flux vidéo.

Pour cela l'invention a pour objet un procédé, un dispositif de protection et un produit programme d'ordinateur selon les revendications annexées.

L'invention et ses avantages seront mieux compris à la lecture de la description détaillée qui va suivre de deux modes de réalisation particuliers, donnés uniquement à titre illustratifs et non limitatifs, la description étant faite en se référant aux dessins annexés sur lesquels :
- [Fig.1] La Figure 1 est une représentation schématique, sous forme de modules fonctionnels, d'un dispositif de protection selon un premier mode de réalisation de l'invention ;
- [Fig.2] La Figure 2 est une représentation sous forme de blocs du procédé de protection mis en œuvre par le dispositif de la figure 1 ; et,
- [Fig.3] La Figure 3 est une représentation schématique, sous forme de modules fonctionnels, d'un dispositif de protection selon un second mode de réalisation de l'invention.

De manière générale, l'invention porte sur un dispositif de protection, logiciel ou matériel, disposé en coupure sur un chemin de transmission d'un flux de données vidéo, entre un émetteur et un destinataire de ce flux.

Le flux vidéo est tronçonné ou paquétisé, c'est-à-dire qu'il est constitué d'une succession de paquets. La partie de charge utile d'un paquet respecte un CODEC vidéo.

Le dispositif de protection est adapté pour appliquer une politique de confidentialité permettant d'attribuer un niveau de protection N adapté à chaque paquet du flux vidéo.

Ce dispositif de protection est propre à réémettre un flux composite comportant, outre un flux vidéo sortant dérivé du flux vidéo entrant, un flux de métadonnées de confidentialité. Le flux de données sortant respecte le formant MPEG-TS. Ce flux de métadonnées est également un flux paquétisé, chaque paquet de métadonnées de confidentialité étant étroitement associé à un ou plusieurs paquets du flux vidéo.

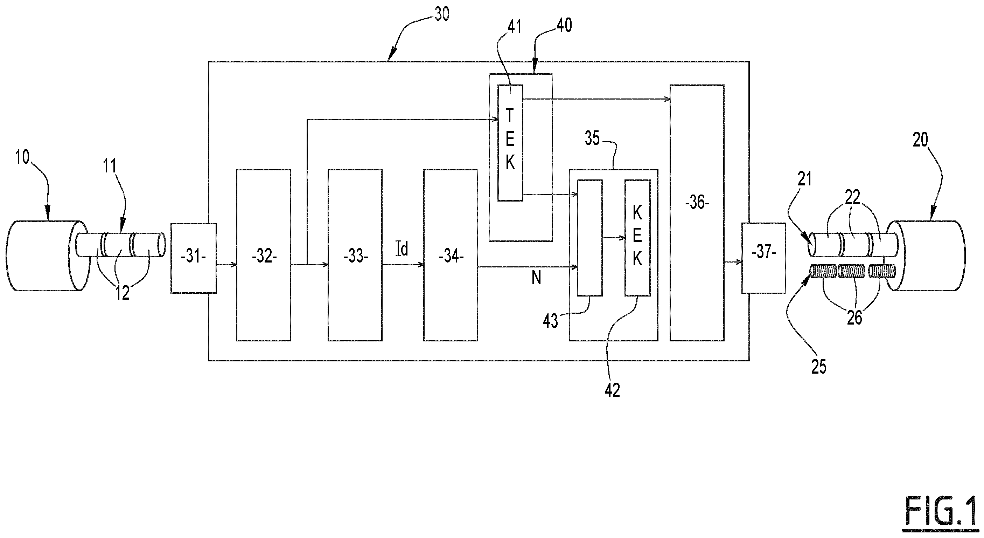

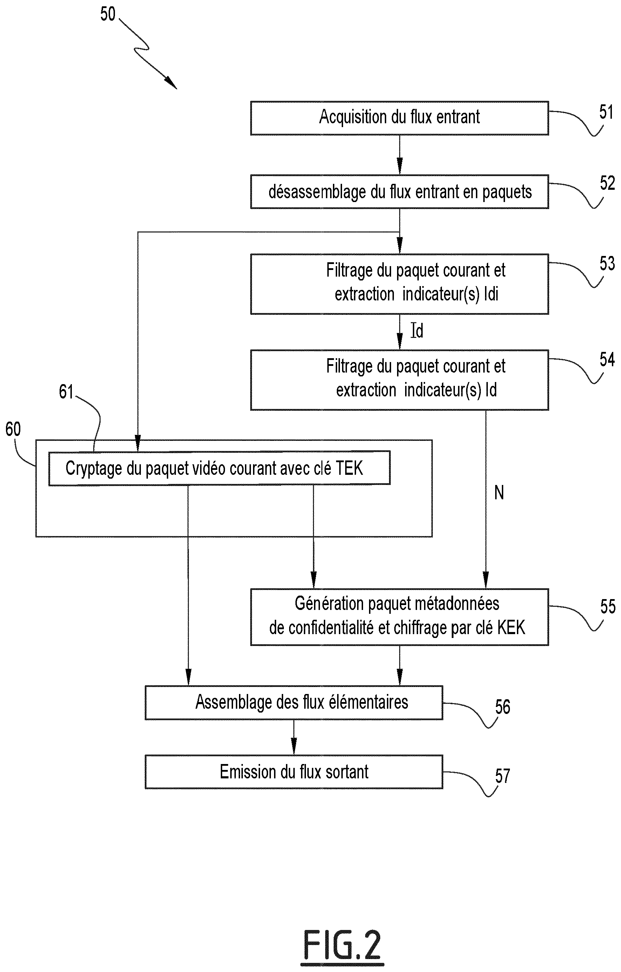

Un premier mode de réalisation de l'invention va maintenant être décrit en référence aux figures 1 et 2.

Ce premier mode de réalisation est adapté au traitement d'un flux entrant contenant seulement un flux élémentaire vidéo. Le flux élémentaire vidéo est un flux subdivisé en paquets vidéo.

Il s'agit par exemple d'un flux brut, en sortie d'un dispositif d'acquisition, comme une caméra de surveillance.

Comme représenté sur la figure 1, le flux entrant 10 (ou conteneur) comporte un flux élémentaire vidéo 11. Le flux élémentaire vidéo 11 est constitué d'une succession de paquets vidéo 12.

Dans ce premier mode de réalisation, le dispositif de protection est une passerelle 30 située en coupure entre deux réseaux (non représentés sur cette figure), le réseau de la source du flux entrant 10 et le réseau du destinataire du flux sortant 20, réémis par le dispositif de protection 30.

Une passerelle est un calculateur comportant des moyens de calcul, comme un processeur, et des moyens de mémorisation, comme une mémoire. La mémoire stocke les instructions de différents programmes, dont l'exécution par le processeur permet de munir la passerelle 30 de différentes fonctionnalités. En particulier, la mémoire de la passerelle 30 comporte les instructions d'un programme de protection multi-niveau du flux entrant.

La passerelle 30 applique une politique de protection à chacun des paquets vidéo 12 du flux entrant. La passerelle 30 est configurée pour appliquer cette politique, qui est donc préétablie. La politique de protection détermine le niveau de confidentialité N à associer au paquet vidéo courant, en fonction d'un ou plusieurs indicateur(s), Id.

Plus précisément, la passerelle 30 comporte une interface d'entrée 31, qui est adaptée pour la réception du flux entrant 10.

En aval de l'interface d'entrée 31, la passerelle 30 comporte un module 32 de désassemblage du flux entrant 10. Ce module a pour fonction d'isoler les différents paquets vidéo 12 du flux élémentaire vidéo 11 du flux entrant 10.

Chaque paquet vidéo est appliqué en entrée d'un module 33 de filtrage. Le module 33 a pour fonction de déterminer la valeur du ou de chacun des indicateurs Id de la politique de protection sur le paquet vidéo courant.

Un indicateur peut être un indicateur de contexte, c'est-à-dire un paramètre extérieur au flux entrant 10 et à la passerelle 30. Un tel indicateur est alors communiqué à la passerelle 30 par un tiers. C'est par exemple une date ou un contexte opérationnel de mise en œuvre de la caméra, source du flux vidéo à protéger.

Mais, de préférence, un indicateur est un élément dérivé du paquet vidéo courant. Par exemple, le module 33 est adapté de manière à mettre en œuvre un algorithme de reconnaissance d'image permettant d'identifier sur la ou les images du paquet vidéo courant la présence d'une cible (dans le cas par exemple d'images issues d'une caméra de surveillance). Si une cible est effectivement détectée, un indicateur « présence de cible » bascule de la valeur nulle à la valeur unité.

La passerelle 30 comporte, en aval du module 33, un module 34 de décision. Le module 34, à partir d'un ou de plusieurs des indicateurs Id déterminés par le module 33 pour le paquet vidéo courant, décide de la valeur du niveau de confidentialité N à attribuer à ce paquet vidéo courant.

La passerelle 30 comporte, en aval du module 34, un module 35 de génération de paquets de métadonnées de confidentialité. Le module 35 comporte un sous-module 43 de concaténation des différents champs constitutifs d'un paquet de métadonnées de confidentialité. Un paquet de métadonnées de confidentialité comporte un champ d'étiquetage temporel permettant d'associer un paquet de métadonnées de confidentialité à un paquet vidéo en leur attribuant une même date.

Un paquet de métadonnées comporte également un champ de niveau de confidentialité indiquant la valeur N calculée par le module 34 pour le paquet vidéo courant.

Enfin, le paquet de métadonnées comporte également un champ cryptographique.

Le module 35 comporte un sous-module 42 de chiffrage d'un paquet de métadonnées de confidentialité. En fonction de la valeur de N indiquant que le paquet vidéo courant est réservé à des destinataires authentifiés, le sous-module 42 sélectionne une clé de sécurité adaptée à ces destinataires et crypte le paquet de métadonnées associé au paquet vidéo courant. Le sous-module 42 utilise une clé de sécurité, comme une clé de cryptage de clé KEY (« key encryption key »).

La clé de sécurité KEK est partagée entre la passerelle 30 et les destinataires du flux vidéo ayant le droit de connaitre le contenu de ce flux. La manière d'échanger les clés KEK entre passerelle et destinataire(s) est connue en tant que telle et ne fait pas partie de la présente invention.

La passerelle 30 comporte un module 36 d'assemblage des flux élémentaires, à la fois un flux élémentaire vidéo sortant 21 correspondant au flux élémentaire vidéo entrant 11 et le flux élémentaire de métadonnées de confidentialité 25 issu du module 35 et composé des paquets de métadonnées de confidentialité cryptés.

La passerelle 30 comporte un module cryptographique 40.

Le module cryptographique 40 prend en entrée le paquet vidéo courant délivré en sortie du module 32 de désassemblage.

Le module cryptographique 40 comporte un sous-module 41 propre à crypter le paquet vidéo courant au moyen d'une clé de session, par exemple une clé de cryptage de trafic - TEK (« traffic encryption key »). Le sous-module 41 est capable de générer une clé de session TEK par paquet vidéo à protéger. Le paquet vidéo crypté est transmis au module 36 d'assemblage. Les différents paquets vidéo cryptés 22 constituent le flux élémentaire vidéo 21 du flux vidéo sortant 20.

Le sous-module 41 transmet la clé de session TEK au sous-module 43.

C'est cette clé TEK qui est placée dans le champ de cryptage du paquet de métadonnées de confidentialité associé au paquet vidéo courant.

Enfin, la passerelle 30 comporte une interface de sortie 37 permettant de réémettre le flux sortant 20 construit par le module 36 sur le réseau à destination du destinataire.

Le flux sortant 20 est donc constitué d'un flux élémentaire vidéo 21 et d'un flux élémentaire de métadonnées de confidentialité 25. Le flux élémentaire vidéo est constitué d'une succession de paquets vidéo 22. Le flux élémentaire de métadonnées de confidentialité 25 est constitué d'une succession de paquets de métadonnées de confidentialité 26.

Le flux sortant 20 respecte le protocole MPEG-TS (« Moving Picture Experts Group - Transport Stream » ou « Groupe d'experts en images animées - Flux de transport»), notamment dans sa dernière version en date IEC 13818-1 du 2022 septembre 2022.

La Figure 2 représente un mode de réalisation du procédé de protection selon l'invention résultant de la mise en œuvre de la passerelle 30 de la figure 1.

Le procédé 50 débute par une étape 51 d'acquisition du flux entrant. L'étape 51 correspond à l'utilisation de l'interface d'entrée 31.

Puis, le procédé 50 se poursuit par la décomposition du flux entrant 10 pour retrouver le flux élémentaire vidéo 11 et le découpage du flux élémentaire vidéo 11 en différents paquets vidéo 12. Cette étape 52 correspond à l'exécution du module 32 de désassemblage du flux entrant. L'étape 53 correspond au filtrage du paquet vidéo courant pour évaluer un ou plusieurs indicateur(s) Id définis par la politique de confidentialité mise en œuvre par la passerelle 30. L'étape 53 correspond à l'exécution du module 33 de de filtrage du paquet vidéo courant.

Les différents identifiants Id sont transmis au module de décision 34, qui, à l'étape 54, détermine le niveau de confidentialité N adapté au paquet vidéo courant.

Le niveau de confidentialité ainsi déterminé est transmis au module 35.

L'étape 60 correspond à l'exécution du module 40 sur le paquet vidéo courant.

Dans l'étape 61, le paquet vidéo courant est crypté au moyen de la clé de session TEK de manière à obtenir un paquet vidéo courant crypté. Ce dernier est transmis au module 36 d'assemblage des flux élémentaires.

La clé de session TEK est transmise au module 35.

Dans l'étape 55, correspondant à l'exécution du module 35, un paquet de métadonnées de confidentialité est d'abord construit. Il comporte différents champs, notamment :
- un champ d'étiquetage temporel reprenant l'étiquette temporelle du paquet vidéo courant de manière à associer un paquet de métadonnées particulier, à un paquet vidéo particulier.
- un champ pour le niveau de confidentialité N déterminé à l'issue de l'étape 54.
- un champ de chiffrage permettant de transmettre la clé de session TEK utilisée à l'issue de l'étape 60 pour chiffrer le paquet vidéo courant.

Le paquet de métadonnées de confidentialité est ensuite chiffré en utilisant la clé KEK adaptée au niveau de confidentialité N (en particulier adaptée aux droits des utilisateurs autorisés à connaitre le contenu du flux).

Le paquet de métadonnées de confidentialité chiffré est transmis au module 36.

Dans l'étape 56, correspondant à l'exécution du module 36, le flux sortant 20 est assemblé à partir des flux élémentaires vidéo (construit à partir de la succession des paquets vidéo cryptés en sortie de l'étape 61) et du flux élémentaire de métadonnées (construit à partir de la succession des paquets de métadonnées cryptés en sortie de l'étape 55).

Enfin, dans l'étape 57, le flux sortant 20 est réémis vers le destinataire.

Il est à noter que, sur la figure 1, les flux élémentaires du flux sortant sont représentés séparément l'un de l'autre, mais les paquets de ces deux flux élémentaires sont en fait multiplexés dans le flux sortant, formant conteneur.

Le mode de réalisation préféré comprend le chiffrement systématique des paquets vidéo avec une clé TEK et comprend toujours le chiffrement du paquet de métadonnées de confidentialité (dans lequel se trouve la clé TEK) avec la clé KEK.

La capacité qu'aura un destinataire à accéder, oui ou non, aux paquets d'un flux dépend par conséquent du fait qu'il dispose, oui ou non, de la clé KEK. Cela renvoie par conséquent à la méthode de distribution de la clé KEK pour ne la mettre à disposition que des destinataires qui ont un droit à connaître les paquets de métadonnées de confidentialité et, après extraction de la clé TEK, les paquets vidéo correspondants.

Avantageusement, une même clé TEK peut être utilisée pour crypter chacun des paquets d'une séquence de plusieurs paquets vidéo successifs. Un paquet de métadonnées est alors généré non pas pour chaque paquet vidéo, mais pour cette séquence de paquets vidéo. Un seul paquet de métadonnées de confidentialité est alors associé à la séquence de paquets vidéo cryptés. Eventuellement, une séquence pouvant être longue, le paquet de métadonnées de confidentialité est répété à fréquence fixe dans le flux sortant. Le paquet de métadonnées de confidentialité est chiffré au moyen de la même KEK à chaque répétition.

Il est à souligner que le fait de placer une clé de session TEK dans le paquet de métadonnées de confidentialité associé à un paquet vidéo crypté permet une association entre ces paquets non seulement par le champ d'étiquetage temporel, mais surtout par le champ cryptographique contenant la clé de session TEK permettant de décrypter le paquet vidéo correspondant. Ceci permet donc au destinataire de décrypter le paquet vidéo crypté associé à cette clé de session TEK et seulement celui-ci. Alors que l'association par un champ temporel est faible, l'association par une clé de cryptage est une association forte, permettant de rendre la présente solution robuste.

Le chiffrage de la clé TEK par la clé KEK permet d'accroitre la sécurité en évitant toute altération du flux par un tiers. En effet, si la métadonnée TEK n'était pas chiffrée, un tiers pourrait l'extraire et l'utiliser pour déchiffrer les paquets vidéo ou pour construire de nouveaux paquets vidéo, les crypter avec la clé TEK, et les insérer dans le flux.

Si les paquets vidéo sont cryptés par la clé TEK mais que seule la clé TEK est chiffrée par la clé KEK et aucune des autres métadonnées, ces autres métadonnées de confidentialité peuvent être connues et éventuellement altérées par un attaquant.

Dans un exemple d'usage de ce premier mode de réalisation, toutes les données sont identifiées comme appartenant au même niveau par la politique de sécurité paramétrée. Un seul paquet de métadonnées de confidentialité est alors nécessaire pour labéliser l'ensemble des données du flux. Les données sont tout de même chiffrées avec une clé TEK afin de les lier au paquet de métadonnées de confidentialité, et le paquet de métadonnées de confidentialité et lui-même chiffré avec une clé KEK pour garantir l'intégrité et l'authenticité de l'ensemble. Le paquet de métadonnées de confidentialité est répété à intervalle régulier pour permettre à un nouvel entrant sur le flux de pouvoir le déchiffrer. Sa clé KEK peut demeurer la même.

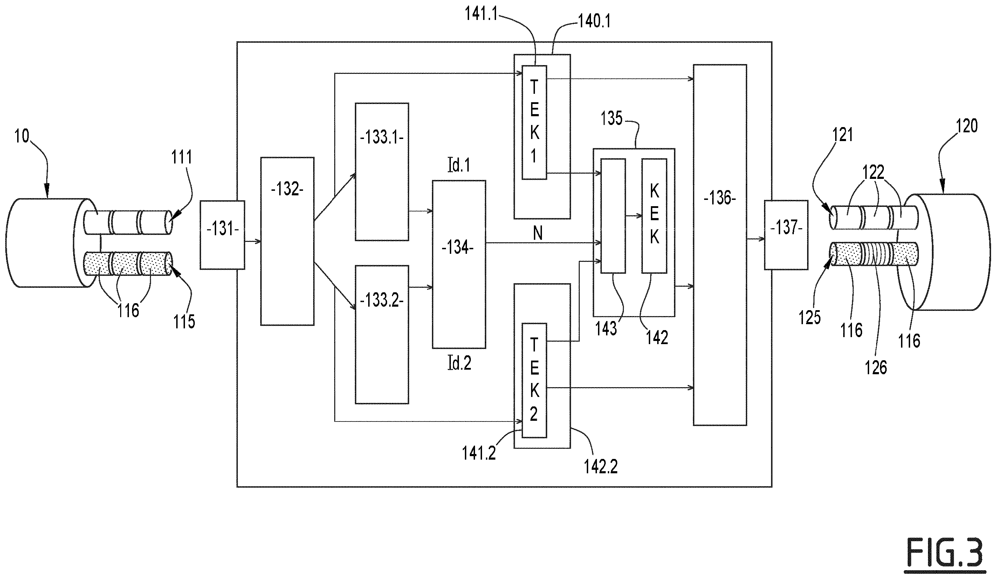

La figure 3 illustre un second mode de réalisation du dispositif selon l'invention.

Un élément du second mode de réalisation de la figure 3 qui est similaire à un élément du mode de réalisation de la figure 1 est référencé par un chiffre de référence correspondant au chiffre de référence utilisé sur la figure 1 pour identifier cet élément similaire, augmenté d'une centaine.

Dans ce second mode de réalisation, la passerelle 130 est adaptée pour appliquer une politique de confidentialité à un flux entrant 110, ce dernier étant maintenant un flux composite. Le flux entrant 110 contient un premier flux élémentaire 110, qui est un flux de paquets vidéo, et un second flux élémentaire 115.

Le second flux élémentaire peut ne pas être corrélé au premier flux élémentaire. Par exemple, il pourrait s'agir d'un autre flux élémentaire vidéo complètement différent et indépendant du premier flux élémentaire vidéo.

De préférence, le second flux élémentaire est corrélé au premier flux élémentaire. Par exemple, il pourrait s'agir d'un flux élémentaire audio associé au flux élémentaire vidéo, chaque paquet du second flux élémentaire étant associé à un ou plusieurs paquet(s) du premier flux élémentaire.

Dans ce qui suit, le second flux élémentaire est un flux élémentaire de métadonnées de contexte qui est corrélé au flux élémentaire vidéo.

Les paquets de métadonnées de contexte 116 du second flux élémentaire 115 portent une étiquette temporelle permettant d'associer un paquet de métadonnées 116 à un paquet vidéo 112.

Il est à noter que, sur la figure 3, les flux élémentaires du flux entrant sont représentés séparément l'un de l'autre, mais les paquets de ces deux flux élémentaires sont en fait multiplexés ensemble dans le flux entrant.

Le flux entrant 110 respecte de préférence le protocole MPEG-TS.

Pour appliquer une politique de confidentialité au flux 110, la passerelle 130 comporte une interface d'entrée 131 pour l'acquisition du flux entrant 110.

En aval de l'interface d'entrée 131, la passerelle 130 comporte un module 132 de désassemblage du flux entrant. Le module 132 est capable de séparer (notamment démultiplexer) les différents flux élémentaires composant le flux composite entrant, et, pour chaque flux élémentaire, de le découper en paquets. Ainsi, sur une première sortie, le module 130 délivre un premier paquet vidéo courant et sur une seconde sortie, le module 130 délivre un second paquet de métadonnées de contexte courant.

La passerelle 130 comporte plusieurs modules de filtrage, chaque module de filtrage étant adapté au traitement des paquets d'un flux élémentaire particulier.

Ainsi un premier module de filtrage 133.1 permet de filtrer le paquet vidéo courant pour obtenir un ou plusieurs premiers indicateurs Id.1, tandis qu'un second module de filtrage 133.2 permet de filtrer le paquet de métadonnées de contexte courant, pour obtenir un ou plusieurs seconds indicateurs Id.2.

Dans le mode de réalisation de la figure 3, ces deux ensembles d'indicateurs sont transmis à un module de prise de décision quant au niveau de confidentialité à appliquer aux paquets courants. Dans le mode de réalisation de la figure 3, ce module 134 est commun aux deux flux élémentaires. Le module 134 délivre un niveau de confidentialité N pour le paquet vidéo courant et le paquet de métadonnées de contexte courant.

La passerelle 130 comporte, en aval du module 134, un module 140.1 de cryptage du paquet vidéo courant et un module 140.2 de cryptage du paquet de métadonnées de confidentialité. Comme dans le premier mode de réalisation de la figure 1, un premier module 141.1 du module 140.1 prend en entrée le paquet vidéo courant délivré par le module 132 et le crypte en utilisant une clé de session TEK1. Le paquet vidéo crypté est transmis à un module 136 d'assemblage des flux élémentaires.

Parallèlement, un second module 141.2 du module 140.2 prend en entrée le paquet de métadonnées de contexte courant délivré par le module 132 et le crypte avec une clé de session TEK2. Le paquet ainsi crypté est transmis au module 136.

Le sous-module 143 du module 135 construit un paquet de métadonnées de confidentialité intégrant :
- un champ d'étiquetage temporel, permettant d'associer un paquet de métadonnées de confidentialité à un paquet vidéo et le paquet de métadonnées de contexte par le partage d'une étiquette temporelle commune (« time stamp »);
- un champ de niveau de confidentialité indiquant la valeur N calculée pour les paquets courants par le module 134 ; et,
- un premier champ cryptographique, contenant la clé de session TEK1,
- un second champ cryptographique, contenant la clé de session TEK2.

Un sous-module 142 du module 135, en fonction de la valeur N du niveau de confidentialité attribuée aux paquets courants par le module 134, chiffre le paquet de métadonnées de confidentialité en utilisant une clé de sécurité KEK. Le sous-module 142 transmet le paquet chiffré au module 136.

Le module 136 permet d'assembler (notamment de multiplexer) les flux élémentaires, à la fois le flux élémentaire vidéo, le flux élémentaire de métadonnées de contexte et le flux élémentaire de métadonnées de confidentialité.

La passerelle 130 comporte une interface de sortie 137 adaptée pour réémettre le flux sortant 120, construit par le module 136, sur le réseau à destination du destinataire ou des destinataires du flux.

Le flux sortant 120 est donc constitué d'un flux élémentaire vidéo 121 et d'un flux élémentaire de métadonnées 125. Le flux élémentaire vidéo est constitué d'une succession de paquets vidéo cryptés 122. Le flux élémentaire de métadonnées 125 est constitué d'une succession de paquets de métadonnées intégrant à la fois des paquets de métadonnées de contexte cryptés 116 (correspondant au paquets contenus dans le second flux élémentaire du flux entrant) et des paquets de métadonnées confidentialité 126 résultant de l'application de la politique mise en œuvre par la passerelle 130.

Le flux sortant 120 respecte le protocole MPEG-TS.

Les différentes étapes du procédé résultant de la mise en œuvre du dispositif 130 ne sont pas décrites ici en détail, mais elles se déduisent de ce qui a été présenté ci-dessus. Notamment, chaque module fonctionnel de la figure 3 pourrait être vu comme une étape de mise en œuvre du procédé correspondant.

Dans un cas d'usage de ce second mode de réalisation, un flux entant composite multiplexé, avec une vidéo et des métadonnées contextuelles appartenant au même programme. La politique de sécurité est réglée de sorte que les métadonnées contextuelles soient estampillées « Divulgation Restreinte » _ DR et les données vidéo soient estampillées « Confidentiel » sauf si la position de la caméra d'acquisition (par exemple donnée par un système GPS équipant la caméra), que l'on peut extraire des métadonnées contextuelles, correspond à une zone fixée préalablement. Les données vidéo sont alors estampillées « Secret ». Un même paquet de métadonnées de confidentialité peut donc être utilisé pour labéliser plusieurs paquets de métadonnées contextuelles. La clé TEK2 utilisée pour chiffrer les paquets de métadonnées contextuelles est incrustée dans le paquet de métadonnées de confidentialité, qui porte en plus les informations du MISP annonçant les paquets vidéo associés comme DR, et celui-ci est chiffré avec une clé KEK associée au niveau DR. Dans cet exemple, il peut donc se faire que deux paquets de vidéo consécutifs n'ont pas le même niveau de confidentialité. Ils sont alors chiffrés avec des clés différentes et possèdent chacun leur paquet de métadonnées de confidentialité associé. Une clé KEK de niveau CD est utilisé pour l'un et une clé KEK de niveau S est utilisé pour l'autre.

En variante de ce second mode de réalisation, une fois les différents flux élémentaires séparés par le module 132, on pourrait avoir des chaines de traitement totalement indépendantes permettant d'appliquer une politique de confidentialité spécifique à chaque flux élémentaire du flux entrant. Ces chaines pourraient utiliser des clés de sessions TEK identiques ou différentes et/ou des clés de chiffrement KEK identiques ou différentes.

Le flux sortant pourrait alors être composé, d'une part, d'un premier flux élémentaire correspondant au premier flux élémentaire et d'un premier flux élémentaire de métadonnées de confidentialité associé au premier flux élémentaire, et, d'autre part, d'un second flux élémentaire correspondant au second flux élémentaire et d'un second flux élémentaire de métadonnées de confidentialité associé à ce second flux élémentaire.

Si dans les modes de réalisation précédents le dispositif d'application d'une politique de confidentialité est un dispositif matériel indépendant (par exemple une passerelle entre un réseau local et un réseau public), en variante, le dispositif d'application d'une politique de confidentialité est essentiellement logiciel, comme par exemple un pilote en sortie d'une caméra d'acquisition d'images.

La politique de confidentialité mise en œuvre par le dispositif peut être redéfinie à intervalle. Cela peut nécessiter de reprogrammer le module de filtrage pour qu'il détermine la valeur d'indicateurs différents sur les paquets entrant.

A ce propos, le module de filtrage est adapté pour associer un ou plusieurs indicateurs à un paquet courant. Cet indicateur peut être déterminé à partir du paquet courant uniquement, mais pourrait également dépendre d'un traitement sur une succession de paquets, comportant le paquet courant et un certain nombre de paquets précédents. L'indicateur pourrait être par exemple une valeur moyenne sur cette succession de paquets ou encore le résultat d'une comparaison entre le paquet courant et un ou plusieurs paquet(s) précédent(s).

En variante, le dispositif de protection ne comporte pas de module de filtrage et la politique de confidentialité se réduit à crypter les paquets d'un flux et chiffrer la clé de session TEK avec une clé de chiffrage KEK adaptée au destinataire.

Avantageusement, lorsque les données de confidentialité sont identiques d'un paquet vidéo à l'autre pour une séquence de paquets vidéo, un paquet de métadonnée de confidentialité n'est émis que pour le premier de ces paquets vidéo. Le destinataire du flux sait alors qu'il doit associer un paquet vidéo avec les données de confidentialité du dernier paquet de métadonnées reçu.

Il est à noter que le standard « Motion Imagery Standard Profile » MISP ST 0102.12 STANAG 4609 (ou « profil standard d'imagerie du mouvement » en français) standardise l'introduction de métadonnées de contexte dans les flux vidéo. Certains champs de ces métadonnées indiquent le niveau de confidentialité des paquets vidéo associés.

Le paquet de métadonnées de confidentialité élaboré par le module 35 (ou le module 135) pourrait reprendre tout ou partie des champs définis par le standard MISP, notamment pour être compatible de ce standard. Des champs complémentaires peuvent donc être envisagés. Par ailleurs, l'ETSI a spécifié des moyens de protection des flux vidéo dans la norme ETSI TS101197-DVB « SIMULCRYPT ».

Dans un même flux multiplexé, la solution SIMULCRYPT permet de transmettre des « programmes » chiffrés et d'autres en clair, un « programme » étant une collection de paquets de différentes natures (audio, vidéo, ...) constituant un flux cohérent (une émission ou un film par exemple). Ainsi, un programme peut être transmis soit non-crypté, soit crypté. Il s'agit donc d'un cryptage binaire (tout ou rien), qui ne permet pas la granularité de protection proposée par la présente invention.

De plus, contrairement à la présente invention, SIMULCRYPT ne permet pas de crypter un tronçon audio avec une clé différente de celle utilisée pour crypter le tronçon vidéo associé.

Plus important encore, SIMULCRYPT chiffre un flux pour le protéger en confidentialité. En revanche, la présente invention est d'abord une solution permettant de lier fortement des métadonnées de confidentialité à des données, et de protéger les données en confidentialité. La présente invention permet donc de séparer, dans un flux, les données par niveau de confidentialité et d'appliquer à chaque donnée une protection adaptée au niveau de confidentialité requis. La séparation des données selon leur niveau de confidentialité s'entend pour des données de flux élémentaires différents, mais surtout des données de paquets différents d'un même flux élémentaire. On pourrait parler d'une séparation « temporelle » entre données (à l'intérieur d'un même flux de données, attribuer des niveaux de confidentialité différents d'un paquet à l'autre) ou d'une séparation « spatiale » (le niveau de confidentialité des données de flux élémentaires différents peuvent être traités indépendamment).

L'utilisation d'une clé de session pour crypter un paquet de données vidéo et placer cette clé de session dans le paquet de métadonnées de confidentialité associé permet de lier fortement les paquets des flux élémentaires vidéo et de métadonnées.

De plus, en chiffrant le paquet de métadonnées de confidentialité, la présente invention permet d'assurer l'intégrité et l'authenticité de cette métadonnée. La solution spécifiée par l'OTAN ne permet pas d'assurer l'intégrité et l'authenticité de la métadonnée, ni de la lier au flux vidéo par une signature cryptographique.

Selon l'invention, pour garantir l'intégrité et l'authenticité des métadonnées de confidentialité, ces dernières sont englobées dans le chiffrement par la clé KEK.

La solution spécifiée par l'ETSI ne permet pas de gérer des politiques de sécurité complexes basées sur des attributs et sur des niveaux de sensibilité hétérogènes dans un même flux.

La présente invention offre une capacité binaire : soit on déchiffre la clé de cryptage du flux vidéo (pour pouvoir ensuite décrypter le flux vidéo ; soit on ne peut pas déchiffrer la clé de cryptage. La présente invention permet de chiffrer certains paquets ou tronçons de paquets d'un flux avec une clé, et d'autres tronçons de ce même flux avec une autre clé.

L'utilisation d'une clé de session pour crypter un paquet de données vidéo et placer cette clé de session dans le paquet de métadonnées de confidentialité associé permet de lier fortement les paquets des flux élémentaires vidéo et de métadonnées.

De plus, en chiffrant le paquet de métadonnées de confidentialité, la présente invention permet d'assurer l'intégrité et l'authenticité de cette métadonnée. La solution spécifiée par l'OTAN ne permet pas d'assurer l'intégrité et l'authenticité de la métadonnée, ni de la lier au flux vidéo par une signature cryptographique.

Selon l'invention, pour garantir l'intégrité et l'authenticité des métadonnées de confidentialité, ces dernières sont englobées dans le chiffrement par la clé KEK.

La solution spécifiée par l'ETSI ne permet pas de gérer des politiques de sécurité complexes basées sur des attributs et sur des niveaux de sensibilité hétérogènes dans un même flux.

La présente invention offre une capacité binaire : soit on déchiffre la clé de cryptage du flux vidéo (pour pouvoir ensuite décrypter le flux vidéo ; soit on ne peut pas déchiffrer la clé de cryptage. La présente invention permet de chiffrer certains paquets ou tronçons de paquets d'un flux avec une clé, et d'autres tronçons de ce même flux avec une autre clé.

## Revendications

1. Procédé de protection d'un flux entrant (10, 110), le flux entrant comportant au moins un flux élémentaire vidéo entrant (11, 111), le flux élémentaire vidéo entrant comportant une succession de paquets vidéo entrants (12, 112), le procédé étant **caractérisé en ce qu'**il comporte les étapes de :
- désassemblage (52) du flux entrant pour séparer un paquet courant (12, 112, 116) ;
- cryptage du paquet courant avec une clé de session (TEK, TEK1, TEK2) ;
- construction (55) d'un paquet de métadonnées de confidentialité comportant un champ d'étiquette temporelle correspondant à une étiquette temporelle du paquet courant et un champ de confidentialité reprenant la clé de session ;
- chiffrage du paquet de données de confidentialité avec une clé de chiffrage (KEK) ;
- assemblage (56) d'un flux sortant (20, 120) comportant un flux élémentaire sortant regroupant les paquets courants cryptés (22, 122, 116) et d'un flux élémentaire de métadonnées de confidentialité comportant les paquets de métadonnées de confidentialité chiffrés (26, 126).

2. Procédé selon la revendication 1, comportant en outre :
- acquisition d'au moins un indicateur (Id) ; et,
- détermination (54) d'un niveau de confidentialité (N) pour le paquet courant à partir de ou de chaque indicateur,
l'étape de construction (55) d'un paquet de métadonnées de confidentialité comportant, en outre, un champ de niveau de confidentialité reprenant le niveau de confidentialité déterminé pour le paquet courant.

3. Procédé selon la revendication 2, dans lequel la clé de chiffrage (KEK) est sélectionnée en fonction du niveau de confidentialité (N) déterminé pour le paquet courant.

4. Procédé selon l'une quelconque des revendications précédentes, dans lequel l'étape d'acquisition consiste à filtrer (53) le paquet entrant pour évaluer au moins un indicateur (Id).

5. Procédé selon l'une quelconque des revendications précédentes, dans lequel le flux entrant comporte, outre le flux élémentaire vidéo, un flux élémentaire de métadonnées de contexte, l'étape de désassemblage permettant de séparer un paquet de métadonnées de contexte courant.

6. Procédé selon la revendication 5, dans lequel le paquet vidéo courant est crypté avec une première clé de session (TEK1), et le paquet de métadonnées de contexte est crypté avec une seconde clé de session (TEK2).

7. Procédé selon la revendication 6, dans lequel le paquet de métadonnées de confidentialité comporte un premier champ de confidentialité reprenant la première clé de session et un second champ de confidentialité reprenant la seconde clé de session.

8. Procédé selon l'une quelconque des revendications précédentes, dans lequel le flux sortant respecte le protocole « groupe d'experts en images animées - Flux de transport» - MPEG-TS.

9. Procédé selon l'une quelconque des revendications précédentes, dans lequel le paquet de métadonnées de confidentialité comporte des champs supplémentaires pour être compatible du standard de « profil standard d'imagerie du mouvement » - MISP.

10. Dispositif de protection (30) adapté pour mettre en oeuvre un procédé de protection selon l'une quelconque des revendications 1 à 9 sur un flux entrant, le flux entrant comportant au moins un flux élémentaire vidéo entrant.

11. Programme d'ordinateur comportant des instructions logicielles qui, lorsqu'elles sont exécutées par un ordinateur, mettent en oeuvre un procédé de protection selon l'une quelconque des revendications 1 à 9 sur un flux entrant, le flux entrant comportant un flux élémentaire vidéo entrant, le flux élémentaire vidéo entrant comportant une succession de paquets vidéo entrant.

## Patentansprüche

1. Verfahren zum Schützen eines Eingangsstreams (10, 110), wobei der Eingangsstream mindestens einen elementaren Videoeingangsstream (11, 111) umfasst, wobei der elementare Videoeingangsstream eine Aufeinanderfolge von Videoeingangspaketen (12, 112) umfasst, wobei das Verfahren **dadurch gekennzeichnet ist, dass** es folgende Schritte umfasst:
- Desassemblieren (52) des Eingangsstreams, um ein aktuelles Paket (12, 112, 116) zu trennen;
- Verschlüsseln des aktuellen Pakets mit einem Sitzungsschlüssel (TEK, TEK1, TEK2);
- Aufbauen (55) eines Pakets von Datenschutz-Metadaten, umfassend ein temporäres Etikettenfeld, das einem temporären Etikett des aktuellen Pakets entspricht, und ein Datenschutzfeld, das den Sitzungsschlüssel wieder aufnimmt;
- Kodieren des Datenschutz-Datenpakets mit einem Kodierschlüssel (KEK);
- Assemblieren (56) eines Ausgangsstreams (20, 120), der einen elementaren Ausgangsstream umfasst, der die aktuellen verschlüsselten Pakete (22, 122, 116) neu gruppiert, und eines elementaren Datenschutz-Metadatenstreams, der die kodierten Datenschutz-Metadatenpakete (26, 126) umfasst.

2. Verfahren nach Anspruch 1, umfassend außerdem:
- Erfassen mindestens eines Indikators (Id); und
- Bestimmen (54) einer Datenschutzstufe (N) für das aktuelle Paket, ausgehend von dem oder jedem Indikator,
wobei der Schritt des Aufbauens (55) eines Datenschutz-Metadatenpakets außerdem ein Datenschutzstufenfeld umfasst, das die bestimmte Datenschutzstufe für das aktuelle Paket wieder aufnimmt.

3. Verfahren nach Anspruch 2, wobei der Kodierschlüssel (KEK) je nach der Datenschutzstufe (N), die für das aktuelle Paket bestimmt wurde, ausgewählt wird.

4. Verfahren nach einem der vorhergehenden Ansprüche, wobei der Schritt des Erfassens aus dem Filtern (53) des Eingangspakets besteht, um mindestens einen Indikator (Id) zu bewerten.

5. Verfahren nach einem der vorhergehenden Ansprüche, wobei der Eingangsstream außer dem elementaren Videostream einen elementaren Kontextmetadatenstream umfasst, wobei der Schritt des Desassemblierens ermöglicht, ein aktuelles Kontextmetadatenpaket zu trennen.

6. Verfahren nach Anspruch 5, wobei das aktuelle Videopaket mit einem ersten Sitzungsschlüssel (TEK1) verschlüsselt wird und das Kontextmetadatenpaket mit einem zweiten Sitzungsschlüssel (TEK2) verschlüsselt wird.

7. Verfahren nach Anspruch 6, wobei das Datenschutz-Metadatenpaket ein erstes Datenschutzfeld umfasst, das den ersten Sitzungsschlüssel wiederaufnimmt, und ein zweites Datenschutzfeld, das den zweiten Sitzungsschlüssel wiederaufnimmt.

8. Verfahren nach einem der vorhergehenden Ansprüche, wobei der Ausgangsstream dem Protokoll "Motion Picture Experts Group - Transport Stream" MPEG-TS entspricht.

9. Verfahren nach einem der vorhergehenden Ansprüche, wobei das Datenschutz-Metadatenpaket zusätzliche Felder umfasst, um mit dem Standard "Motion Imagery Standard Profile" - MISP - kompatibel zu sein.

10. Schutzgerät (30), das ausgelegt ist, um ein Schutzverfahren nach einem der Ansprüche 1 bis 9 auf einem Eingangsstream zu implementieren, wobei der Eingangsstream mindestens einen elementaren Videoeingangsstream umfasst.

11. Computerprogramm, umfassend Softwareanweisungen, die, wenn sie von einem Computer ausgeführt werden, ein Schutzverfahren nach einem der Ansprüche 1 bis 9 auf einem Eingangsstream implementieren, wobei der Eingangsstream einen elementaren Videoeingangsstream umfasst, wobei der elementare Videoeingangsstream eine Aufeinanderfolge von Videoeingangspaketen umfasst.

## Claims

1. A method for protecting an incoming stream (10, 110), the incoming stream including at least one incoming elementary video stream (11, 111), the incoming elementary video stream including a succession of incoming video packets (12, 112), the method being **characterized in that** same includes the steps of:
- disassembly (52) of the incoming stream for separating a current packet (12, 112, 116);
- encryption of the current packet with a session key (TEK, TEK1, TEK2);
- building (55) of a confidentiality metadata packet including a time stamp field corresponding to a time stamp of the current packet and a confidentiality field using the session key;
- encryption of the confidentiality data packet with an encryption key (KEK);
- assembly (56) of an outgoing stream (20, 120) including an outgoing elementary stream grouping together the encrypted current packets (22, 122, 116) and an elementary stream of confidentiality metadata including the encrypted confidentiality metadata packets (26, 126).

2. The method according to claim 1, further including:
- acquisition of at least one indicator (Id); and,
- determination (54) of a level of confidentiality (N) for the current packet from the indicator or from each indicator,
the step of building (55) a confidentiality metadata packet further including a field of level of confidentiality having the level of confidentiality determined for the current packet.

3. The method according to claim 2, wherein the encryption key (KEK) is selected according to the level of confidentiality (N) determined for the current packet.

4. The method according to any of the preceding claims, wherein the acquisition step consists of filtering (53) the incoming packet for evaluating at least one indicator (Id).

5. The method according to any of the preceding claims, wherein the incoming stream includes, in addition to the video elementary stream, an elementary stream of context metadata, the disassembly step being used for separating a current context metadata packet.

6. The method according to claim 5, wherein the current video packet is encrypted with a first session key (TEK1), and the context metadata packet is encrypted with a second session key (TEK2).

7. The method according to claim 6, wherein the confidentiality metadata packet includes a first confidentiality field using the first session key and a second confidentiality field using the second session key.

8. The method according to any of the preceding claims, wherein the outgoing stream follows the Motion Picture Expert Group -Transport Stream - MPEG-TS protocol.

9. The method according to any of the preceding claims, wherein the confidentiality metadata packet includes additional fields in order to be compatible with the Motion Imagery Standards Profile - MISP standard.

10. A protection device (30) suitable for implementing a protection method according to any of claims 1 to 9 on an incoming stream, the incoming stream including at least one incoming video elementary stream.

11. A computer program comprising software instructions which, when executed by a computer, implement a protection method according to any of claims 1 to 9 on an incoming stream, the incoming stream including an incoming video elementary stream, the incoming elementary video stream including a succession of incoming video packets.
